# EUROPÄISCHE PATENTANMELDUNG

(11) **EP 3 623 103 A1**
(43) Veröffentlichungstag der Anmeldung: **18.03.2020**
(21) Anmeldenummer: 19197389.0
(22) Anmeldetag: 13.09.2019
(51) Int. Cl.: B23Q 3/155, B25J 15/00, B23Q 1/48, B23Q 1/54, B23Q 16/08

(54) **VORRICHTUNG ZUR HANDHABUNG EINES WERKZEUGS EINER WERKZEUGMASCHINE ODER EINES ROBOTERS**

(30) Priorität: 14.09.2018 DE 102018122562
(71) Anmelder: Plappert Industrieanlagen GmbH, 73614 Schorndorf (DE)
(72) Erfinder:
(74) Vertreter: Wörz, Volker Alfred

(57) **Zusammenfassung**

Die Erfindung betrifft eine Vorrichtung (10) zur Handhabung eines Werkzeugs (12) einer Werkzeugmaschine oder eines Roboters. Um eine Handhabung des Werkzeugs (12) sicherer und einfacher zu gestalten, wird vorgeschlagen, dass die Vorrichtung (10) umfasst:
- eine Trägerstruktur (16),
- eine Befestigungsvorrichtung (18) zur Befestigung der Trägerstruktur (16) an einem Handhabungsmanipulator (80),
- mindestens eine an der Trägerstruktur (16) verstellbar befestigte Werkzeuggreifervorrichtung (20) zum Greifen und Halten des Werkzeugs (12), und
- eine zwischen der Trägerstruktur (16) und der mindestens einen Werkzeuggreifervorrichtung (20) wirkende Verstellvorrichtung (22) zum Verstellen der mindestens einen Werkzeuggreifervorrichtung (20) bezüglich der Trägerstruktur (16).

## Beschreibung

Die vorliegende Erfindung betrifft eine Vorrichtung zur Handhabung eines Werkzeugs einer Werkzeugmaschine oder eines Roboters.

Eine Werkzeugmaschine kann bspw. als eine Dreh- oder Fräsmaschine oder als eine mechanische Presse oder ein Maschinenhammer zum Schmieden ausgebildet sein. Eine Werkzeugmaschine im Sinne der vorliegenden Erfindung umfasst bspw. eine CNC (Computerized Numerical Control)-Maschine oder ein Bearbeitungszentrum (BAZ).

Aus dem Stand der Technik sind Werkzeugmaschinen und Roboter bekannt, die schwere und nur mit Mühe handhabbare Werkzeuge aufweisen. Die Werkzeuge können ein Gewicht von mehr als 10-20 kg, in Einzelfällen bis zu 45 kg oder noch mehr aufweisen. Die Handhabung der Werkzeuge umfasst insbesondere ein Einsetzen und Entnehmen des Werkzeugs in die bzw. aus der Werkzeugmaschine oder in den bzw. aus dem Roboter, sowie einen Transport der Werkzeuge, bspw. zwischen einem Werkzeuglager und einer Werkzeugmaschine oder einem Roboter oder zwischen einem Werkzeuglager und einem Werkzeugmagazin der Werkzeugmaschine oder des Roboters. Die schlechte Handhabbarkeit von Werkzeugen kann sich bspw. aufgrund einer besonderen (unpraktischen) Geometrie oder einer Scharfkantigkeit der Werkzeuge ergeben. Nach heutigem Stand der Technik erfolgt die Handhabung manuell durch Bedienpersonal. In der Praxis ist deshalb ein Werkzeugwechsel bei Werkzeugmaschinen häufig zeitaufwändig und beschwerlich.

Der vorliegenden Erfindung liegt deshalb die Aufgabe zugrunde, einen Werkzeugwechsel bei Werkzeugmaschinen, insbesondere bei schweren und/oder unhandlichen Werkzeugen, einfacher, effizienter und sicherer zu gestalten.

Diese Aufgabe wird durch die Vorrichtung zur Handhabung eines Werkzeugs einer Werkzeugmaschine mit den Merkmalen des Patentanspruchs 1 gelöst. Insbesondere wird vorgeschlagen, dass die Vorrichtung umfasst:
- eine Trägerstruktur,
- eine Befestigungsvorrichtung zur Befestigung der Trägerstruktur an einem Handhabungsmanipulator,
- eine an der Trägerstruktur verstellbar befestigte Werkzeuggreifervorrichtung zum Greifen und Halten des Werkzeugs, und
- eine zwischen der Trägerstruktur und der Werkzeuggreifervorrichtung wirkende Verstellvorrichtung zum Verstellen der Werkzeuggreifervorrichtung bezüglich der Trägerstruktur.

Die erfindungsgemäße Handhabungsvorrichtung kann an einer Werkzeugmaschine, einem Arbeitsplatz, einem Werkzeug- oder Transportwagen, einer Messmaschine einem Werkzeuglager, einem Werkzeugmagazin einer Werkzeugmaschine oder eines Roboters oder an allen anderen Orten, an denen Werkzeuge gehandhabt werden, eingesetzt werden. Außerdem können mit der Handhabungsvorrichtung auch Werkzeuge transportiert werden, bspw. zwischen einem Werkzeuglager und einer Werkzeugmaschine. Die erfindungsgemäße Vorrichtung bietet Vorteile nicht nur hinsichtlich Ergonomie und Arbeitssicherheit, sondern auch bezüglich der Effizienz. Die Handhabung eines Werkzeugs mit der erfindungsgemäßen Vorrichtung erfordert nur eine Person und der Handhabungsprozess selbst wird deutlich vereinfacht, was zu einer Zeiteinsparung bei einem Werkzeugwechsel führt. Langfristig können über mehrere Werkzeugmaschinen große wirtschaftliche Vorteile erzielt werden, da die unproduktiven Ruhezeiten der Maschinen während eines Werkzeugwechsels verkürzt und die produktiven Arbeitszeiten verlängert werden.

Die erfindungsgemäße Handhabungsvorrichtung umfasst eine Trägerstruktur mit einer Befestigungsvorrichtung, über die die Trägerstruktur an einem Handhabungsmanipulator befestigt werden kann. Die Trägerstruktur ist vorzugsweise derart geformt, dass sich die Handhabungsvorrichtung bei einem durch die Werkzeuggreifervorrichtung ergriffenen und gehaltenen Werkzeug in einem Gleichgewichtszustand befindet. Insbesondere ist in dem Gleichgewichtszustand das von der Handhabungsvorrichtung ergriffene und gehaltene Werkzeug mittels einer Translationsvorrichtung der Verstellvorrichtung derart ausgerichtet, dass ein Schwerpunkt des Werkzeugs auf einer Drehachse einer Rotationsvorrichtung der Verstellvorrichtung liegt. Mit Hilfe der Translationsvorrichtung kann also die Schwerpunktlage des Werkzeugs eingestellt werden.

Der Handhabungsmanipulator, an dem die Trägerstruktur mittels der Befestigungsvorrichtung befestigt ist, kann bspw. als ein beliebiges Hebemittel ausgebildet sein. Ein Hebemittel umfasst bspw. ein Hebezeug, einen Gewichtsausgleicher (sog. Balancer), einen Kran, ein Handhabungsgerät, einen Manipulator, einen Kettenzug, ein Flurförderfahrzeug (z.B. einen Gabelstapler), ein Roboter (wahlweise mit Gelenkmomentensensoren zur Mensch-Roboter-Kollaboration und für sensitive Arbeiten, wie bspw. der Kuka LBR iiwa) und Ähnliches. Mithilfe des Handhabungsmanipulators kann die Handhabungsvorrichtung auf einer z-Achse (parallel zur Schwerkraft) bewegt bzw. angehoben und abgesenkt werden. Zudem kann die Handhabungsvorrichtung mithilfe des Handhabungsmanipulators vorzugsweise auch entlang einer x-Achse und/oder einer y-Achse, also in der x-y-Ebene, bewegt werden. Dabei kann der Handhabungsmanipulator stationär oder mobil ausgebildet sein. Bei einem mobilen Manipulator kann die Bewegung der Handhabungsvorrichtung in x- und/oder y-Richtung durch Bewegen bzw. Verfahren des Manipulators erfolgen. Bei einem stationären Handhabungsmanipulator kann die Bewegung der Handhabungsvorrichtung in x- und/oder y-Richtung bspw. durch Bewegen bzw. Verstellen eines Teils des Manipulators erfolgen, an dem die Handhabungsvorrichtung befestigt ist. Das Verstellen des Manipulators kann bspw. mittels Schienen, eines Teleskoparms oder eines Klapparms realisiert werden.

Die vorliegende Erfindung erlaubt ein effizientes, intuitives und sicheres Werkzeughandling durch eine exakte Positionierung und Ausrichtung des Werkzeugs in der Schwebe. Die Ergonomie wird verbessert und bleibende physische Folgeschäden aufgrund des Hebens zu schwerer Lasten (die Werkzeuge wiegen zum Teil bis zu 45 kg oder mehr) werden vermieden. Die Arbeitssicherheit wird erhöht, indem die Gefahr des Herunterfallens des Werkzeugs während des Wechsels oder Transports verhindert wird. Auch die Gefahr eines Kontakts des Werkzeugs in der Schwebe mit Störkanten beim Einbauen des Werkzeugs in die Werkzeugmaschine oder beim Entnehmen des Werkezeugs aus der Werkzeugmaschine bei engen Räumlichkeiten wird verringert. Zudem erfüllt die vorliegende Erfindung die Empfehlungen der BGR 500 ("Betreiben von Lastaufnahmeeinrichtungen im Hebezeugbetrieb"; Berufsgenossenschaftliche Regeln). Die Erfindung führt zu einer Kostenersparnis durch die Einsparung von Personal- und die Verringerung des Zeitaufwands für die Umrüstung von Werkzeugmaschinen und für den Transport von Werkzeugen. Die Verstellung der Position und Ausrichtung des Werkzeugs relativ zu der Trägerstruktur mittels der Verstellvorrichtung sowie die Betätigung der Werkzeuggreifervorrichtung kann rein manuell oder motorisch, bspw. mittels eines elektrischen oder pneumatischen Antriebs, realisiert sein. Bei einem elektrischen Antrieb der Verstellvorrichtung kann eine besonders hohe Flexibilität durch Ausgestaltung der Handhabungsvorrichtung als akku-/ batteriebetriebene und/ oder des Handhabungsmanipulators als portable (mobile) Lösung erreicht werden. Schließlich bietet die Erfindung eine erhebliche Erleichterung für Mitarbeiter, wodurch deren Zufriedenheit erhöht wird und Arbeitsunfälle beim Werkzeughandling reduziert werden.

Gemäß einer vorteilhaften Weiterbildung der vorliegenden Erfindung wird vorgeschlagen, dass die Befestigungsvorrichtung eine an der Trägerstruktur befestigte oder ausgebildete Öse umfasst, über welche die Vorrichtung an dem Handhabungsmanipulator befestigt werden kann. Dabei verfügt der Handhabungsmanipulator an seinem distalen Ende bspw. über einen Haken, der in die Öse eingreift, sodass die Handhabungsvorrichtung sicher und zuverlässig sowie lösbar an dem Handhabungsmanipulator befestigt werden kann. Vorzugsweise kann die Handhabungsvorrichtung bezüglich des Manipulators um die z-Achse gedreht werden. Dies kann bspw. dadurch realisiert werden, dass ein Haken des Handhabungsmanipulators über eine flexible Verbindung (z.B. ein Seil oder eine Kette) oder ein Endlosdrehlager an dem restlichen Manipulator befestigt ist. Die flexible Verbindung ermöglicht eine Drehung des Hakens und der daran befestigten Handhabungsvorrichtung um die z-Achse.

In einer alternativen Ausführungsform wäre es auch denkbar, dass die Befestigungsvorrichtung zur direkten und unmittelbaren Befestigung der Trägerstruktur an dem Handhabungsmanipulator ausgebildet ist.

Gemäß einer vorteilhaften Ausgestaltung der vorliegenden Erfindung wird vorgeschlagen, dass die Verstellvorrichtung eine Rotationsvorrichtung aufweist, die ausgebildet ist, eine Rotation der Werkzeuggreifervorrichtung bezüglich der Trägerstruktur zu ermöglichen. Mithilfe der Rotationsvorrichtung kann das von der Werkzeuggreifervorrichtung ergriffene und gehaltene Werkzeug um eine Drehachse rotiert werden. Eine Rotation der Werkzeuggreifervorrichtung kann bspw. erforderlich sein, um ein in einem Werkzeuglager gelagertes Werkzeug zu ergreifen oder um ein in der Werkzeuggreifervorrichtung gehaltenes Werkzeug in einem Werkzeuglager abzusetzen oder in eine Greif- oder Spanneinrichtung (z.B. Spannbacken, Spannfutter) oder in ein Werkzeugmagazin einer Werkzeugmaschine oder eines Roboters einzusetzen.

Die Drehachse der Rotationsvorrichtung kann nahezu beliebig im Raum orientiert sein. Insbesondere ist daran gedacht, dass die Drehachse horizontal, vertikal oder schräg, bspw. in einem Winkel von 45°, verläuft. Die Orientierung der Drehachse hängt im Wesentlichen von den Anforderungen des Einzelfalls ab, bspw. von der Anordnung und Ausrichtung der Greif- oder Spanneinrichtung (z.B. Spannbacken, Spannfutter) der Werkzeugmaschine oder des Roboters, der Anordnung und Ausrichtung von Aufnahmen eines Werkzeugmagazins einer Werkzeugmaschine oder eines Roboters.

Vorzugsweise weist die Rotationsvorrichtung Mittel zum Festlegen der Werkzeuggreifervorrichtung in einer bestimmten Drehposition bezüglich der Trägerstruktur auf. Die Mittel umfassen bspw. einen Rastmechanismus, der ausgebildet ist, die Werkzeuggreifervorrichtung in verschiedenen diskreten Drehpositionen bezüglich der Trägerstruktur mittels Formschluss festzulegen. Die diskreten Drehpositionen können äquidistant (bspw. jeweils um 15° oder 30°) zueinander beabstandet sein. Alternativ ist es auch denkbar, die diskreten Drehpositionen unterschiedlich zueinander zu beabstanden, sodass die Werkzeuggreifervorrichtung bspw. bei 30°, 45°, 60°, 90°, 135° und 180° bezüglich der Trägerstruktur festgelegt werden kann. Die diskreten Drehpositionen, in denen die Werkzeuggreifervorrichtung bezüglich der Trägerstruktur festgelegt werden kann, sind an die jeweiligen Anforderungen angepasst. Schließlich wäre es auch denkbar, dass die Mittel die Werkzeuggreifervorrichtung in beliebigen, stufenlos verstellbaren Drehpositionen bezüglich der Trägerstruktur festlegen können. Dies kann bspw. durch einen Klemmmechanismus realisiert werden, der ausgebildet ist, die Werkzeuggreifervorrichtung in einer beliebigen Drehposition bezüglich der Trägerstruktur mittels Reibschluss festzulegen.

Gemäß einer anderen vorteilhaften Weiterbildung der vorliegenden Erfindung wird vorgeschlagen, dass die Verstellvorrichtung eine Translationsvorrichtung aufweist, die ausgebildet ist, eine Translation der Werkzeuggreifervorrichtung bezüglich der Trägerstruktur zu ermöglichen. Mithilfe der Translationsvorrichtung kann die Werkzeuggreifervorrichtung entlang einer linearen Achse bezüglich der Trägerstruktur verstellt werden. Auf diese Weise kann die Lage des Schwerpunkts eines von der Handhabungsvorrichtung ergriffenen und gehaltenen Werkzeugs eingestellt werden. Ziel ist es dabei, das ergriffene und gehaltene Werkzeug mit möglichst geringem Kraftaufwand um die Drehachse der Rotationsvorrichtung rotieren zu können. Im Rahmen der Translation wird die Werkzeuggreifervorrichtung vorzugsweise derart bezüglich der Trägerstruktur linearverstellt, dass die Drehachse der Rotationsvorrichtung durch den Schwerpunkt des Werkzeugs verläuft. Die Möglichkeit, die Schwerpunktlage des ergriffenen und gehaltenen Werkzeugs justieren zu können, macht das Rotieren und ein exaktes Ausrichten des Werkzeugs ohne viel Kraftaufwand möglich.

Vorteilhafterweise weist die Translationsvorrichtung Mittel zum Festlegen der Werkzeuggreifervorrichtung in einer bestimmten Linearposition bezüglich der Trägerstruktur auf. Die Mittel umfassen bspw. einen Rastmechanismus, der es erlaubt, die Werkzeuggreifervorrichtung in verschiedenen diskreten Linearpositionen bezüglich der Trägerstruktur festzulegen. Die diskreten Linearpositionen können bspw. jeweils äquidistant, bspw. 1-5 cm, zueinander beabstandet sein. Ferner ist es auch denkbar, die diskreten Linearpositionen unterschiedlich zueinander zu beabstanden. Die diskreten Linearpositionen, in denen die Werkzeuggreifervorrichtung bezüglich der Trägerstruktur festgelegt werden kann, sind an die jeweiligen Anforderungen angepasst. Ein Verrasten des Rastmechanismus in einer bestimmten Linearpositionen kann bspw. mittels eines federbelasteten Rastelements erzielt werden, das in eine entsprechende Verrastung eingreift und durch Federkraft in der Verrastung gehalten wird. Zum Verstellen der Linearposition kann das Rastelement entgegen der Federkraft gelöst werden, sodass der Eingriff mit der Verrastung aufgehoben wird. Schließlich wäre es auch denkbar, dass die Mittel die Werkzeuggreifervorrichtung in beliebigen, stufenlos verstellbaren Linearpositionen bezüglich der Trägerstruktur festlegen können. Dies kann bspw. durch einen Klemmmechanismus realisiert werden, der ausgebildet ist, die Werkzeuggreifervorrichtung in einer beliebigen Linearposition bezüglich der Trägerstruktur mittels Reibschluss festzulegen.

Anstelle der beschriebenen Festlegung der Werkzeuggreifervorrichtung bezüglich der Trägerstruktur in einer bestimmten Rotations- und/oder Linearposition mittels der Festlegmittel (z.B. Rastmechanismus oder Klemmmechanismus), wäre es auch denkbar, die Werkzeuggreifervorrichtung mittels eines vorzugsweise selbsthemmenden Getriebemechanismus manuell oder motorisch bezüglich der Trägerstruktur zu verstellen. In diesem Fall würde die Werkzeuggreifervorrichtung vorzugsweise selbstständig in der eingestellten Rotations- und/oder Linearposition verbleiben. In diesem Sinne kann der Getriebemechanismus für eine Linearverstellung bspw. eine Gewindespindel mit einem Außengewinde umfassen, auf der ein Spindelelement mit einer Öffnung oder Aussparung mit einem entsprechenden Innengewinde drehbar geführt ist. Durch Drehen der Gewindespindel um deren Längsachse wird das Spindelelement auf der Gewindespindel parallel zu Längsachse verstellt. Diese Längsverstellung des Spindelelements auf der Gewindespindel kann zur Linearverstellung der Werkzeuggreifervorrichtung bezüglich der Trägerstruktur genutzt werden.

Vorteilhafterweise ist die Translationsvorrichtung zwischen der Rotationsvorrichtung und der Werkzeuggreifervorrichtung angeordnet. Durch eine Betätigung der Rotationsvorrichtung kann somit eine Drehung der Werkzeuggreifervorrichtung zusammen mit der Translationsvorrichtung bewirkt werden. Ein entsprechender Effekt lässt sich auch erzielen, wenn die Rotationsvorrichtung zwischen der Translationsvorrichtung und der Werkzeuggreifervorrichtung angeordnet ist.

Selbstverständlich kann die Handhabungsvorrichtung auch ohne eine Rotationsvorrichtung oder ohne eine Translationsvorrichtung ausgebildet sein. In diesem Fall kann der Handhabungsmanipulator, an dem die Handhabungsvorrichtung befestigt ist, vorzugsweise die entsprechende Rotations- oder Translationsbewegung der Werkzeuggreifervorrichtung ausführen.

Gemäß einer bevorzugten Ausführungsform der vorliegenden Erfindung wird vorgeschlagen, dass die Werkzeuggreifervorrichtung mindestens einen Greifer jeweils mit vorzugsweise zwei Greifbacken aufweist, wobei mindestens eine der Greifbacken verstellbar ist und wobei bei geschlossenen Greifbacken das Werkzeug zwischen den Greifbacken mittels Formschluss oder Reibschluss gehalten ist. Eine der Greifbacken kann auch einfach als Anlagefläche ausgebildet sein, wahlweise mit einer anti-rutsch Beschichtung, bspw. aus Gummi oder Kunststoff, und/oder einer Kontur, welche einer Außenkontur einer Werkzeugaufnahme entspricht und mit dieser in Eingriff treten kann, um das Greifen des Werkzeugs bzw. der Werkzeugaufnahme einfacher und/oder sicherer zu machen. Die verstellbare(n) Greifbacke(n) kann/können mechanisch/ manuell oder motorisch (z.B. elektrisch oder pneumatisch) verstellt werden. Eine manuelle Verstellung kann bspw. mittels eines Kniehebels realisiert sein, der aufgrund seiner besonderen Kinematik einerseits eine Bewegung einer Greifbacke zwischen einer geöffneten und einer geschlossenen Position und andererseits ohne zusätzliche Sicherungsmittel eine Sicherung der Greifbacke in der geschlossenen Position realisieren kann, sodass das Werkzeug sicher und zuverlässig in der Werkzeuggreifervorrichtung gehalten ist. Alternativ wäre es auch denkbar, dass die Greifbacke(n) federbelastet sind, durch ein Federelement in ihrer geschlossenen Stellung gehalten werden, und um die Werkzeugaufnahme herum einschnappen. Vorzugsweise verfügen der oder die Greifer über Sicherungsmittel, um ein unbeabsichtigtes Öffnen der Greifbacke(n) zu verhindern.

Gemäß einer bevorzugten Ausführungsform der Erfindung wäre es denkbar, dass die Werkzeuggreifervorrichtung zwei oder mehr Greifer aufweist, die nebeneinander, übereinander oder versetzt zueinander positioniert und gleich oder unterschiedlich zueinander ausgerichtet sein können. Die Greifer können zum simultanen Ergreifen und Halten einer Werkzeugaufnahme desselben Werkzeugs oder aber zum Ergreifen und Halten von Werkzeugaufnahmen verschiedener Werkzeuge vorgesehen sein. Bei einer Werkzeuggreifervorrichtung mit zwei Greifern ist es bspw. möglich, mit einem ersten Greifer ein erstes Werkzeug aus einem Werkzeuglager oder einem Werkzeug- oder Transportwagen zu ergreifen, das in eine Werkzeugmaschine oder einen Roboter oder in deren Werkzeugmagazin eingesetzt werden soll. Nach Annäherung an die gewünschte Position in der Werkzeugmaschine, dem Roboter oder dem Werkzeuglager kann mittels des zweiten Greifers ein zweites Werkzeug ergriffen und entnommen werden. Durch eine einfache Translations- und/oder Rotationsbewegung der Werkzeuggreifervorrichtung kann nach der Entnahme des zweiten Werkzeugs der erste Greifer in die gewünschte Position gebracht werden und das erste Werkzeug dort eingesetzt oder abgelegt werden. Dabei ist es nicht erforderlich, die Handhabungsvorrichtung zwischen dem Ergreifen des zweiten Werkzeugs und dem Einsetzen/ Ablegen des ersten Werkzeugs aus der Werkzeugmaschine, dem Roboter oder deren Werkzeugmagazin herauszubewegen. Vorzugsweise ist das von der Werkzeuggreifervorrichtung, insbesondere von dem mindetsens einen Greifer, ergriffene und gehaltene Werkzeug um eine Rotationsachse drehbar gehalten. Dabei verläuft die Rotationsachse vorzugsweise senkrecht zu der Drehachse der Rotationsvorrichtung. Selbstverständlich sind jedoch auch beliebig andere Winkel zwischen der Rotationsachse und der Drehachse denkbar. Auf diese Weise kann das Werkzeug zur Übergabe in eine korrekte Drehposition um die Rotationsachse gebracht werden. Insbesondere können vor dem Einsetzen in eine Greif- oder Spanneinrichtung (z.B. Spannbacken, Spannfutter) oder in ein Werkzeugmagazin einer Werkzeugmaschine oder eines Roboters eventuell vorhandene Rotationsasymmetrien (radiale Vorsprünge und/oder Vertiefungen/ Aussparungen) der Werkzeugaufnahme des Werkzeugs mit den entsprechenden Rotationsasymmetrien der Aufnahme der Greif- oder Spanneinrichtung oder des Werkzeugmagazins in Flucht gebracht werden.

Die Werkzeuggreifervorrichtung als Ganzes oder aber der oder die Greifer der Werkzeuggreifervorrichtung sind vorzugsweise lösbar an der Verstellvorrichtung befestigt. Zur lösbaren Befestigung können bspw. Schrauben, eine Schnellspannvorrichtung oder ähnliches vorgesehen sein. Auf diese Weise ist es möglich, in Abhängigkeit von der Ausgestaltung der Werkzeugaufnahme des zu ergreifenden und zu haltenden Werkzeugs den dafür passenden Greifer an der Trägerstruktur zu befestigen. Somit können mit der Handhabungsvorrichtung durch einfachen Austausch der Werkzeuggreifervorrichtung bzw. des oder der Greifer Werkzeuge mit unterschiedlichen Werkzeugaufnahmen ergriffen und gehalten werden.

Gemäß einer vorteilhaften Weiterbildung der Erfindung wird vorgeschlagen, dass die Trägerstruktur verstellbar an der Befestigungsvorrichtung befestigt ist. Zusammen mit der Trägerstruktur können auch die daran befestigten Werkzeuggreifervorrichtung und die Verstellvorrichtung zum Verstellen der Werkzeuggreifervorrichtung bezüglich der Trägerstruktur relativ zu der Befestigungsvorrichtung verstellt werden. Somit erlaubt diese Weiterbildung eine Verstellung, insbesondere eine Neigungsverstellung, der Greifer der Werkzeuggreifervorrichtung und eines von den Greifern eventuell gehaltenen Werkzeugs.

In Abhängigkeit davon, was für eine Art von Werkzeug (Größe, Gewicht, Abmessungen, etc.) die Greifer ergriffen haben, verändert sich die Schwerpunktlage der Einheit bestehend aus der erfindungsgemäßen Handhabungsvorrichtung und einem ergriffenen Werkzeug. Durch Verstellen der Trägerstruktur (zusammen mit der Werkzeuggreifervorrichtung) relativ zur Befestigungsvorrichtung kann die Schwerpunktlage der Einheit verändert und eingestellt werden. Ferner kann das ergriffene Werkzeug bzw. dessen Greifernut durch Verstellen der Trägerstruktur bezüglich der Befestigungsvorrichtung in eine gewünschte Neigung gebracht werden, bspw. um 35° - 40° relativ zur vertikalen z-Achse geneigt. Derart geneigte Werkzeuge können besonders einfach und schnell in schräg stehende Werkzeughalterungen von Werkzeug- oder Transportwagen oder von Werkzeugschränken eingesetzt werden. Typische Neigungen von schräg stehenden Werkzeughalterungen liegen im Bereich zwischen 20° und 50°, besonders bevorzugt zwischen 30° und 40°. Dementsprechend können in solchen Werkzeughalterungen schräg gelagerte Werkzeuge durch die Greifer besonders gut und sicher ergriffen werden, wenn diese zuvor zusammen mit der Trägerstruktur relativ zu der Befestigungsvorrichtung verstellt, insbesondere geneigt worden sind.

Gemäß einer bevorzugten Ausführungsform wird vorgeschlagen, dass die Trägerstruktur um eine Drehachse neigungsverstellbar an der Befestigungsvorrichtung befestigt ist. Auf diese Weise ist eine Neigungsverstellung der Trägerstruktur zusammen mit den Greifern der Werkzeuggreifervorrichtung und eines gegebenenfalls ergriffenen Werkzeugs möglich. Die Drehachse verläuft vorzugweise in einem Abstand zu einem Schwerpunkt des ergriffenen Werkzeugs und/oder zu einem Schwerpunkt der Einheit bestehend aus der erfindungsgemäßen Handhabungsvorrichtung und dem ergriffenen Werkzeug. Dadurch kann durch Neigungsverstellung der Trägerstruktur um die Drehachse die Schwerpunktlage der Einheit oder des ergriffenen Werkzeugs verstellt werden.

Vorteilhafterweise weist die Verstellvorrichtung eine Rotationsvorrichtung auf, die ausgebildet ist, eine Rotation der Werkzeuggreifervorrichtung bezüglich der Trägerstruktur um eine Drehachse zu ermöglichen, und dass die Drehachse zur Neigungsverstellung der Trägerstruktur bezüglich der Befestigungsvorrichtung insbesondere senkrecht durch die Drehachse oder oberhalb oder unterhalb der Drehachse zur Rotation der Werkzeuggreifervorrichtung bezüglich der Trägerstruktur verläuft.

Besonders bevorzugt ist es, wenn die Vorrichtung Mittel zum Verstellen der Trägerstruktur relativ zu der Befestigungsvorrichtung aufweist. Diese Verstellmittel können manuell oder motorisiert angetrieben sein. Ein manueller Antrieb umfasst bspw. einen Hebel oder eine Kurbel. Ein motorisierter Antrieb kann bspw. einen Elektromotor umfassen. Die Verstellmittel sollten selbsthemmend sein, so dass die Trägerstruktur nach dem Verstellen in der eingestellten Position bzw. Lage relativ zu der Befestigungsvorrichtung verbleibt. Alternativ können auch zusätzliche Sicherungsmittel vorgesehen sein, um die Trägerstruktur nach dem Verstellen in der eingestellten Position bzw. Lage relativ zu der Befestigungsvorrichtung zu halten.

Ferner können die Verstellmittel einen Ratschenmechanismus aufweisen. Dieser hat den Vorteil, dass er selbsthemmend ist und die Trägerstruktur selbsttätig und automatisch in der eingestellten Position bzw. Lage relativ zu der Befestigungsvorrichtung hält.

Vorteilhafterweise weisen die Verstellmittel einerseits eine Zahnstange und anderseits ein mit der Zahnstange in Eingriff stehendes Zahnrad auf, wobei ein Drehen des Zahnrads ein Verstellen der Trägerstruktur relativ zu der Befestigungsvorrichtung bewirkt. Bevorzugt ist die Zahnstange starr an der Trägerstruktur befestigt. Bevorzugt ist die Zahnstange bogenförmige ausgebildet, wobei der Bogen vorzugsweise auf einer Kreisfläche liegt, deren Mittelpunkt auf der Drehachse zur Neigungsverstellung der Trägerstruktur bezüglich der Befestigungsvorrichtung liegt. Das Zahnrad ist drehbar an der Befestigungsvorrichtung befestigt. Vorzugsweise steht es mit dem manuellen oder motorisierten Antrieb drehfest in Verbindung.

Weitere Merkmale und Vorteile der vorliegenden Erfindung werden nachfolgend anhand der Figuren näher erläutert. Es zeigen:
- Figur 1: ein erstes bevorzugtes Ausführungsbeispiel einer erfindungsgemäßen Handhabungsvorrichtung in einer Seitenansicht;
- Figur 2: die Handhabungsvorrichtung aus Figur 1 in einer Rückansicht;
- Figur 3: die Handhabungsvorrichtung aus Figur 1 in einer Vorderansicht;
- Figur 4: die Handhabungsvorrichtung aus Figur 1 in einer ersten perspektivischen Ansicht von schräg oben;
- Figur 5: die Handhabungsvorrichtung aus Figur 1 in einer zweiten perspektivischen Ansicht von schräg unten;
- Figur 6: die Handhabungsvorrichtung aus Figur 1 in einer Ansicht von unten;
- Figur 7: ein anderes bevorzugtes Ausführungsbeispiel einer erfindungsgemäßen Handhabungsvorrichtung in einer Ansicht von schräg unten;
- Figur 8: ein weiteres Ausführungsbeispiel einer erfindungsgemäßen Handhabungsvorrichtung in einer perspektivischen Ansicht von schräg oben;
- Figur 9: die Handhabungsvorrichtung aus Figur 8 in einer Seitenansicht; und
- Figur 10: die Handhabungsvorrichtung aus Figur 8 in einer weiteren Ansicht von schräg oben.

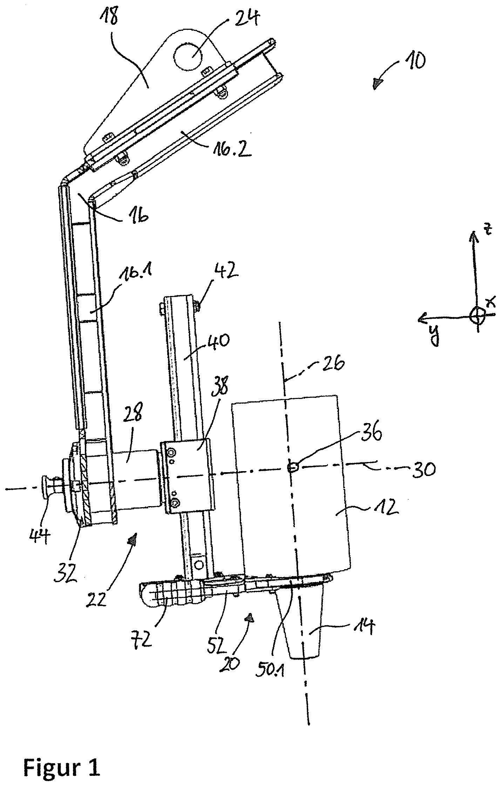

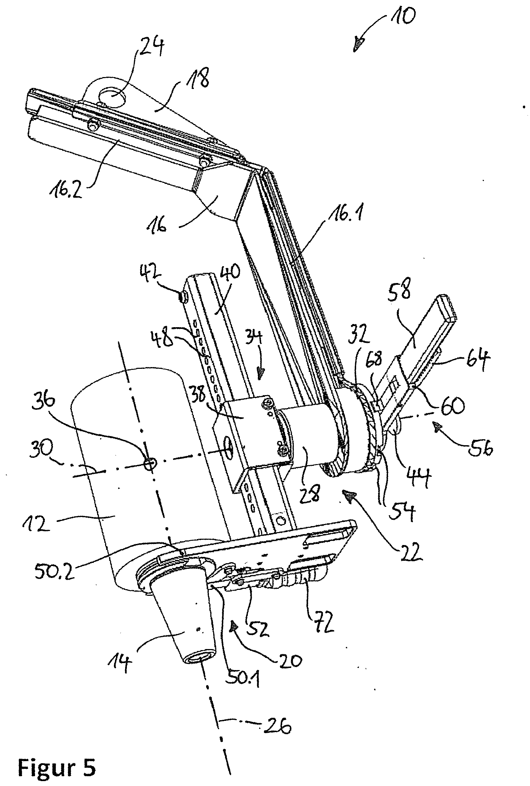

In den Figuren 1-6 ist eine erfindungsgemäße Handhabungsvorrichtung in ihrer Gesamtheit mit dem Bezugszeichen 10 bezeichnet. Die Vorrichtung dient zur Handhabung eines Werkzeugs einer Werkzeugmaschine. Eine Werkzeugmaschine kann bspw. als eine Dreh- oder Fräsmaschine oder als eine mechanische Presse oder ein Maschinenhammer zum Schmieden ausgebildet sein. Eine Werkzeugmaschine im Sinne der vorliegenden Erfindung umfasst bspw. eine CNC (Computerized Numerical Control)-Maschine, ein Bearbeitungszentrum (BAZ) und/oder kann Teil eines flexiblen Fertigungssystems (FFS) sein. Statt eines realen Werkzeugs ist in den Figuren lediglich ein Werkzeugdummy 12 dargestellt, der nachfolgend jedoch als Werkzeug bezeichnet wird. Das Werkzeug 12 verfügt über eine Werkzeugaufnahme 14, die in diesem Beispiel die Form eines Standardkegels (hier beispielhaft SK 50 nach DIN 69871, Spannweite 1 - 13 mm) hat, mit dem das Werkzeug 12 in eine Greif- oder Spanneinrichtung einer Werkzeugmaschine (nicht dargestellt) eingesetzt und dort festgelegt werden kann. Alternativ kann die Werkzeugaufnahme 14 auch anders ausgestaltet sein, bspw. als eine MK (Morsekegel)-, HSK (Hohlschaftkegel)-, BT-, PSC (Polygonschaftkegel)- oder eine beliebig andere Aufnahme.

Die Handhabungsvorrichtung 10 dient dazu, eine Handhabung von Werkzeugen 12, insbesondere von schweren Werkzeugen (z.B. mit einem Gewicht von bspw. 10-20 kg, in Einzelfällen sogar von über 45 kg oder noch mehr) oder von Werkzeugen mit einer unpraktischen Geometrie (z.B. Werkzeuge mit großen, ausladenden Abmessungen oder scharfkantige Werkzeuge) einfacher, effizienter und sicherer zu gestalten. Selbstverständlich kann die Handhabungsvorrichtung 10 auch für Standard-Werkzeuge (z.B. kein besonders hohes Gewicht, einfache Geometrie) verwendet werden. Die Handhabung der Werkzeuge 12 umfasst insbesondere ein Einsetzen und eine Entnahme der Werkzeuge 12 in die bzw. aus der Werkzeugmaschine, in ein bzw. aus einem Werkzeuglager oder ein Ablegen und ein Aufnehmen der Werkzeuge 12 auf einen bzw. von einem Werkzeug- oder Transportwagen, sowie einen Transport der Werkzeuge 12, bspw. innerhalb der Reichweite des Handhabungsmanipulators, an dem die Handhabungsvorrichtung befestigt ist, aber auch zwischen einem Werkzeuglager und einer Werkzeugmaschine oder einem Werkzeugmagazin der Werkzeugmaschine oder des Roboters (wenn der Handhabungsmanipulator eine entsprechende Reichweite aufweist oder mobil ausgebildet ist).

Die erfindungsgemäße Vorrichtung 10 umfasst:
- eine Trägerstruktur 16,
- eine Befestigungsvorrichtung 18 zur Befestigung der Trägerstruktur 16 an einem Handhabungsmanipulator (nicht dargestellt),
- eine an der Trägerstruktur 16 verstellbar befestigte Werkzeuggreifervorrichtung 20 zum Greifen und Halten des Werkzeugs 12, und
- eine zwischen der Trägerstruktur 16 und der Werkzeuggreifervorrichtung 20 wirkende Verstellvorrichtung 22 zum Verstellen einer Position und/oder Ausrichtung der Werkzeuggreifervorrichtung 20 bezüglich der Trägerstruktur 16.

Die Handhabungsvorrichtung 10 kann an einer Werkzeugmaschine, einem Arbeitsplatz, einem Werkzeug- oder Transportwagen, einer Messmaschine, einem Werkzeuglager, einem Werkzeugmagazin einer Werkzeugmaschine oder eines Roboters oder an allen anderen Orten, die ein Werkzeughandling erfordern, eingesetzt werden. Außerdem kann die Handhabungsvorrichtung 10 auch zum Transport von Werkzeugen 12 genutzt werden. Die Vorrichtung 10 bietet Vorteile nicht nur hinsichtlich Ergonomie und Arbeitssicherheit, sondern auch bezüglich der Effizienz. Die Handhabung eines Werkzeugs 12 mit der Vorrichtung 10 erfordert nur eine Person und der Handhabungsprozess selbst wird deutlich vereinfacht, was zu einer Zeiteinsparung bei einem Transport eines Werkzeugs sowie bei einem Werkzeugwechsel und einer Umrüstung der Werkzeugmaschine führt.

Die Trägerstruktur 16 umfasst einen ersten Träger 16.1 mit einer im wesentlichen vertikaler Erstreckung sowie einen zweiten Träger 16.2, der sich ausgehend von einem oberen Ende des ersten Trägers 16.1 nach schräg oben erstreckt. Die Träger 16.1, 16.2 sind vorzugsweise als Profile aus Metall ausgebildet, die miteinander verschweißt sind. Die Träger 16.1, 16.2 können jedoch auch aus einem einzigen Profil bestehen, das am Übergang zwischen den beiden Trägern 16.1, 16.2 abgewinkelt ist. Die Befestigungsvorrichtung 18 ist an der Oberseite des zweiten Trägers 16.2 befestigt. In dem gezeigten Beispiel ist die Befestigungsvorrichtung 18 mittels Schrauben und Muttern an der Trägerstruktur 16 befestigt. Selbstverständlich kann die Befestigungsvorrichtung 18 auch auf andere Weise, bspw. durch Schweißen, an der Trägerstruktur 16 befestigt sein. Es ist außerdem denkbar, dass die Befestigungsvorrichtung 18 einteilig mit der Trägerstruktur 16 ausgebildet ist.

Die Trägerstruktur 16 wird über die Befestigungsvorrichtung 18 an einem Handhabungsmanipulator befestigt. Dazu weist die Befestigungsvorrichtung 18 in dem gezeigten Beispiel eine Öse 24 auf, über welche die Vorrichtung 10 an dem Handhabungsmanipulator lösbar befestigt werden kann. Dabei verfügt der Handhabungsmanipulator an seinem distalen Ende bspw. über einen Haken, der in die Öse 24 eingreift, sodass die Handhabungsvorrichtung 10 sicher und zuverlässig sowie lösbar an dem Handhabungsmanipulator befestigt ist. Andere Befestigungsarten sind jedoch ebenfalls denkbar.

Die Befestigungsverbindung zwischen der Handhabungsvorrichtung 10 und dem Handhabungsmanipulator ist vorzugsweise derart ausgebildet, dass die Handhabungsvorrichtung 10 bezüglich des Handhabungsmanipulators um die z-Achse (parallel zur Schwerkraft) gedreht werden kann. Dies kann bspw. dadurch realisiert werden, dass ein Haken des Handhabungsmanipulators über eine flexible Verbindung (z.B. ein Seil, eine Kette oder ein Endloslager) an dem restlichen Manipulator befestigt ist. Die flexible Verbindung ermöglicht eine Drehung des Hakens und der daran befestigten Handhabungsvorrichtung 10 um die z-Achse.

Der Handhabungsmanipulator, an dem die Handhabungsvorrichtung 10 befestigt ist, kann bspw. als ein beliebiges Hebemittel ausgebildet sein. Ein Hebemittel umfasst bspw. ein Hebezeug, einen Gewichtsausgleicher (sog. Balancer), einen Kran, ein Handhabungsgerät, einen Manipulator, einen Kettenzug, ein Flurförderfahrzeug (z.B. einen Gabelstapler), ein Roboter (wahlweise mit Gelenkmomentensensoren zur Mensch-Roboter-Kollaboration und für sensitive Arbeiten, wie bspw. der Kuka LBR iiwa) und Ähnliches. Mithilfe des Handhabungsmanipulators kann die Handhabungsvorrichtung 10 entlang der z-Achse nach oben und unten bewegt werden. Zudem kann die Handhabungsvorrichtung 10 mithilfe des Handhabungsmanipulators auch entlang einer x-Achse und/oder einer y-Achse, also in der x-y-Ebene, bewegt werden. Dabei kann der Handhabungsmanipulator stationär oder mobil ausgebildet sein.

Die Trägerstruktur 16 ist vorzugsweise derart geformt, dass sich die Handhabungsvorrichtung 10 zusammen mit dem durch die Werkzeuggreifervorrichtung 20 ergriffenen und gehaltenen Werkzeug 12 in einem Gleichgewichtszustand befindet. Insbesondere ist in dem Gleichgewichtszustand das von der Handhabungsvorrichtung 10 ergriffene und gehaltene Werkzeug 12 mittels einer Translationsvorrichtung 34 der Verstellvorrichtung 22 derart ausgerichtet, dass ein Schwerpunkt 36 des Werkzeugs 12 auf einer Drehachse 30 einer Rotationsvorrichtung 28 der Verstellvorrichtung 22 liegt. Mit Hilfe der Verstellvorrichtung 22 kann also die Schwerpunktlage des Werkzeugs 12 eingestellt werden.

Die Rotationsvorrichtung 28 der Verstellvorrichtung 22 ist ausgebildet, eine Rotation der Werkzeuggreifervorrichtung 20 und ggf. des von dieser ergriffenen und gehaltenen Werkzeugs 12 bezüglich der Trägerstruktur 16 um die Drehachse 30 zu ermöglichen. Die Drehachse 30 der Rotationsbewegung verläuft vorzugsweise quer zur Schwerkraft (z-Achse) und liegt in der x-y-Ebene. Eine Rotation der Werkzeuggreifervorrichtung 20 kann bspw. erforderlich sein, um eine Orientierung der Greifervorrichtung 20 zu ändern, so dass ein in einem Werkzeuglager gelagertes Werkzeug 12 ergriffen oder ein in der Greifervorrichtung 20 gehaltenes Werkzeug 12 in einem Werkzeuglager abgesetzt oder in eine Greif- oder Spanneinrichtung (z.B. Spannbacken, Spannfutter) oder in einem Werkzeugmagazin der Werkzeugmaschine eingesetzt werden kann.

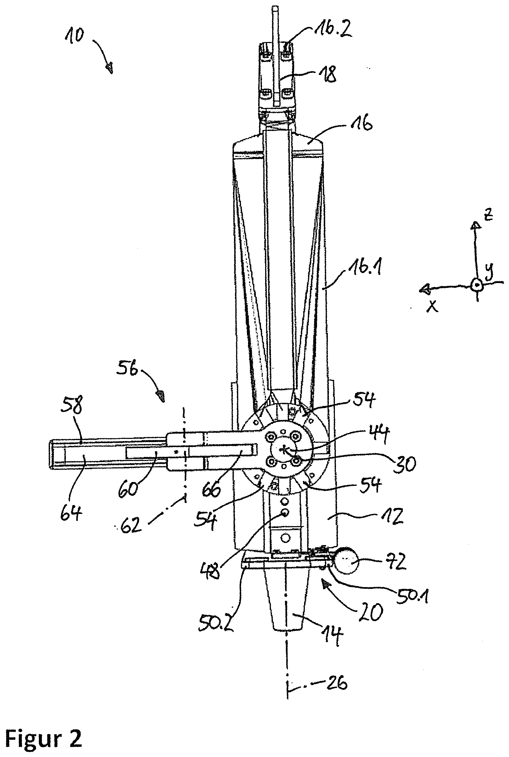

Die Rotationsvorrichtung 28 weist Mittel 32 zum Festlegen der Greifervorrichtung 20 in einer bestimmten Drehposition bezüglich der Trägerstruktur 16 auf. Die Mittel 32 umfassen bspw. einen Rastmechanismus, der es erlaubt, die Greifervorrichtung 20 in verschiedenen diskreten Drehpositionen um die Drehachse 30 herum bezüglich der Trägerstruktur 16 festzulegen. Die diskreten Drehpositionen können bspw. durch Rastvertiefungen 54 definiert sein. Die Vertiefungen 54 können um die Drehachse 30 herum äquidistant zueinander beabstandet (z.B. in 15°- oder 30°-Abständen) ausgebildet sein. Es ist auch denkbar, dass die Vertiefungen 54 - wie in dem Beispiel gezeigt (vgl. Figur 2) - unterschiedlich zueinander zu beabstanden sind, sodass die Greifervorrichtung 20 um die Drehachse 30 bspw. bei 30°, 90°, 135°, 180° und 315° bezüglich der Trägerstruktur 16 festgelegt werden kann. Selbstverständlich können auch andere oder zusätzliche Vertiefungen 54 vorgesehen sein, um andere oder weitere diskrete Drehpositionen zu definieren. Die diskreten Drehpositionen, in denen die Werkzeuggreifervorrichtung 20 bezüglich der Trägerstruktur 16 festgelegt werden kann, sind an die jeweiligen Anforderungen angepasst (z.B. Einschubrichtung des Werkzeugs 12 in ein Werkzeuglager, Werkzeugmagazin oder eine Greif- oder Spanneinrichtung oder entsprechende Ausrichtung oder Entnahmerichtung des Werkzeugs 12). Die Vertiefungen 54 sind der Trägerstruktur 16 zugeordnet und stehen zumindest mittelbar mit dieser in Verbindung.

Alternativ könnte die Werkzeuggreifervorrichtung 20 bezüglich der Trägerstruktur 16 auch in stufenlos verstellbaren Drehpositionen festgelegt werden, bspw. mittels eines Klemmmechanismus.

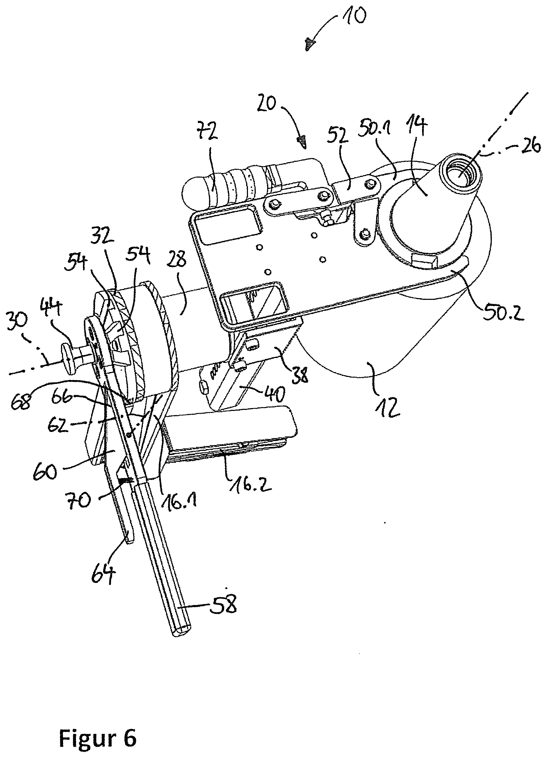

Eine mit der Rotationsvorrichtung 28 in Verbindung stehende Hebelanordnung 56 ist in der Trägerstruktur 16 um die Drehachse 30 drehbar gelagert (vgl. Figur 6). Ein Mitarbeiter kann die Hebelanordnung 56 an einem Griffelement 58 ergreifen und zusammen mit der Rotationsvorrichtung 28, der daran befestigten Translationsvorrichtung 34 (wird nachfolgend noch ausführlicher erläutert), der Greifervorrichtung 20 und ggf. dem darin gehaltenen Werkzeug 12 um die Drehachse 30 drehen. Die Hebelanordnung 56 ist somit der Werkzeuggreifervorrichtung 20 zugeordnet und steht zumindest mittelbar mit dieser in Verbindung. Die Hebelanordnung 56 umfasst ferner einen federbelasteten Kipphebel 60, der um eine parallel zu der Längs- und Drehachse 26 des Werkzeugs 12 verlaufende Drehachse 62 bewegbar ist. Ein erstes Ende 64 des Hebels 60 ist als Griffelement benachbart zu dem Griffelement 58 der Hebelanordnung 56 ausgebildet. Ein gegenüberliegendes Ende 66 des Hebels 60 weist ein Rastelement 68 auf, das in einer Einrastposition des Kipphebels 60 in eine der Rastvertiefungen 54 an der Trägerstruktur 16 eingreift. Eine Feder 70 hält den Kipphebel 60 in seiner Einrastposition. Zum Lösen des Rastmechanismus wird das erste Ende 64 des Hebels 60 entgegen der Kraft der Feder 70 in Richtung des Griffelements 58 gezogen, sodass das Rastelement 68 aus der entsprechenden Vertiefung 54 heraustritt und eine Drehung der Hebelanordnung 56 um die Drehachse 30 ermöglicht. Der Rastmechanismus der Rotationsvorrichtung 28 wird somit durch das Rastelement 68 im Zusammenwirken mit den Rastvertiefungen 54 gebildet. Zusätzlich kann der Hebel 60 auch gegen unbeabsichtigte Betätigung gesichert sein, bspw. mittels einer Schiebefunktion in der Einrastposition. Die Betätigung der Rotationsvorrichtung 28 um die Drehachse 30 kann jedoch auch beliebig anders ausgestaltet sein.

Ferner umfasst die Verstellvorrichtung 22 die bereits erwähnte Translationsvorrichtung 34, die ausgebildet ist, eine Translation (Linearverstellung) der Werkzeuggreifervorrichtung 20 bezüglich der Trägerstruktur 16 zu ermöglichen. Mithilfe der Translationsvorrichtung 34 kann die Greifervorrichtung 20 entlang einer linearen Achse (z.B. in Figur 1 parallel zur z-Achse) bezüglich der Trägerstruktur 16 verstellt werden. Auf diese Weise kann die Lage des Schwerpunkts 36 des Werkzeugs 12 eingestellt werden. Ziel ist es dabei, das ergriffene und gehaltene Werkzeug 12 mit möglichst geringem Kraftaufwand um die Drehachse 30 der Rotationsvorrichtung 28 rotieren zu können. Zu diesem Zweck wird die Greifervorrichtung 20 vorzugsweise derart bezüglich der Trägerstruktur 16 linearverstellt, dass die Drehachse 30 der Rotationsvorrichtung 28 durch den Schwerpunkt 36 des Werkzeugs 12 verläuft. Die Translationsvorrichtung 34 ist vorzugsweise zwischen der Rotationsvorrichtung 28 und der Werkzeuggreifervorrichtung 20 angeordnet. Durch eine Betätigung der Rotationsvorrichtung 28 kann somit eine Drehung der Werkzeuggreifervorrichtung 20 zusammen mit der Translationsvorrichtung 34 bewirkt werden.

Im Einzelnen umfasst die Translationsvorrichtung 34 ein an der Rotationsvorrichtung 28 befestigtes Führungselement 38, an dem eine Führungsschiene 40 entlang der linearen Achse längsverschiebbar gelagert ist. Die Führungsschiene 40 verfügt an ihren beiden Enden jeweils über einen Anschlag, der ein unbeabsichtigtes Herausgleiten der Führungsschiene 40 aus dem Führungselement 38 verhindert. In dem gezeigten Beispiel ist ein oberer Anschlag 42 durch eine Schraube und eine mit dieser zusammenwirkende Mutter realisiert. Der untere Anschlag ist durch einen Teil der Greifvorrichtung 20 gebildet, der an dem unteren Ende der Führungsschiene 40 befestigt ist. Selbstverständlich können die Anschläge auch beliebig anders ausgebildet sein.

Die Translationsvorrichtung 34 weist ferner Mittel 44 zum Festlegen der Werkzeuggreifervorrichtung 20 in einer bestimmten Linearposition bezüglich der Trägerstruktur 16 auf. Die Mittel 44 umfassen bspw. einen Rastmechanismus, der es erlaubt, die Werkzeuggreifervorrichtung 20 in verschiedenen diskreten Linearpositionen bezüglich der Trägerstruktur 16 festzulegen. Die diskreten Linearpositionen können jeweils äquidistant zueinander beabstandet sein (z.B. in Abständen von 1-5 cm). Es ist aber auch denkbar, dass die diskreten Linearpositionen unterschiedlich zueinander beabstandet sind. Die diskreten Linearpositionen, in denen die Werkzeuggreifervorrichtung 20 bezüglich der Trägerstruktur 16 festgelegt werden kann, sind an die jeweiligen Anforderungen angepasst.

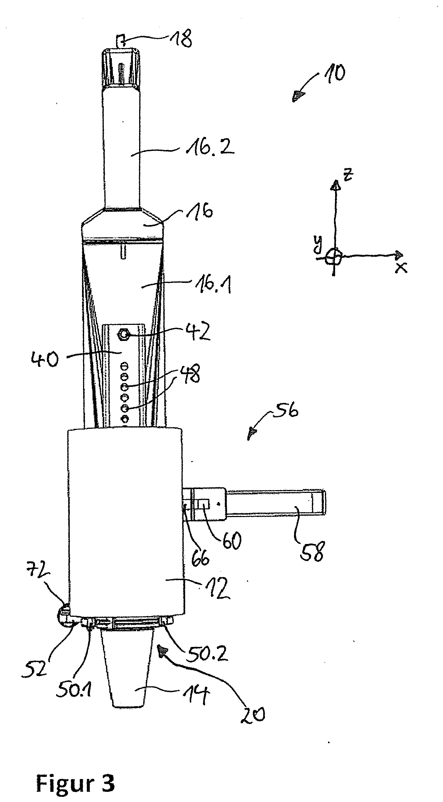

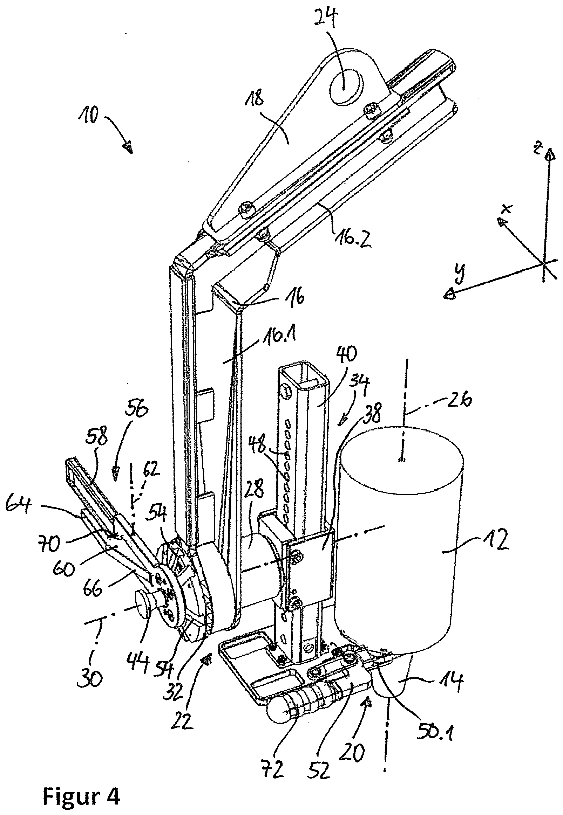

Ein Verrasten des Rastmechanismus in einer bestimmten Linearpositionen kann bspw. mittels eines federbelasteten Rastelements 46 (vgl. Figur 1) erzielt werden, das in eine entsprechende Verrastung eingreift. In dem gezeigten Beispiel umfasst die Verrastung mehrere äquidistant zueinander in der Führungsschiene 40 angeordnete Öffnungen 48 (vgl. Figuren 3 und 4) auf, wobei das Rastelement 46 in die der gewünschten Linearposition entsprechende Öffnung 48 eingreift. Das Rastelement 46 steht mit den Mitteln 44 in Verbindung. Zum Verstellen der Linearposition kann das Rastelement 46 durch Betätigen (z.B. Herausziehen) der Mittel 44 entgegen der Federkraft gelöst werden, sodass der Eingriff mit der Verrastung bzw. einer der Öffnungen 48 aufgehoben wird. Der Rastmechanismus der Translationsvorrichtung 34 wird somit durch das Rastelement 46 im Zusammenwirken mit den Öffnungen 48 gebildet. Zusätzlich kann das Mittel 44 auch gegen unbeabsichtigte Betätigung gesichert sein.

Alternativ könnte die Werkzeuggreifervorrichtung 20 bezüglich der Trägerstruktur 16 auch in stufenlos verstellbaren Linearpositionen festgelegt werden, bspw. mittels eines Klemmmechanismus.

Anstelle der beschriebenen Festlegung der Werkzeuggreifervorrichtung 20 bezüglich der Trägerstruktur 16 in einer bestimmten Rotations- und/oder Linearposition mittels eines Rastmechanismus 54, 68 bzw. 46, 48, wäre es auch denkbar, die Greifervorrichtung 20 mittels eines vorzugsweise selbsthemmenden Getriebemechanismus manuell oder motorisch (z.B. elektrisch oder pneumatisch) bezüglich der Trägerstruktur 16 zu verstellen. Aufgrund des selbsthemmenden Effekts des Getriebemechanismus würde die Greifervorrichtung 20 vorzugsweise selbstständig in der eingestellten Rotations- und/oder Linearposition verbleiben. Der Getriebemechanismus für eine Linearverschiebung kann bspw. eine Gewindespindel mit einem Außengewinde umfassen, auf der ein Spindelelement mit einer Öffnung oder Aussparung mit einem entsprechenden Innengewinde drehbar geführt ist. Durch Drehen der Gewindespindel um deren Längsachse wird das Spindelelement auf der Gewindespindel parallel zu Längsachse verstellt. Selbstverständlich können auch andere selbsthemmende Getriebe eingesetzt werden.

Die Werkzeuggreifervorrichtung 20 ist vorzugsweise lösbar an einem Ende der Führungsschiene 40 der Translationsvorrichtung 34 befestigt, bspw. mittels Schrauben. Durch Austauschen der Greifervorrichtung 20 durch eine andere ist es möglich, die Handhabungsvorrichtung 10 für unterschiedliche Werkzeuge 12 mit verschiedenen Werkzeugaufnahmen 14 zu verwenden. Die Greifervorrichtung 20 weist mindestens einen Greifer mit jeweils zwei Greifbacken 50.1, 50.2 auf (vgl. Figur 6), wobei in diesem Beispiel eine der Greifbacken, nämlich die Greifbacke 50.1, verstellbar ist und die andere Greifbacke 50.2 starr ist. Die Greifbacke 50.1 kann um eine Drehachse, die parallel zu der Drehachse 26 des Werkzeugs 12 verläuft, zwischen einer geschlossenen Position (vgl. Figur 6) und einer geöffneten Position verstellt werden. Selbstverständlich wäre es auch denkbar, beide Greifbacken 50.1, 50.2 verstellbar auszugestalten. Bei geschlossenen Greifbacken 50.1, 50.2 ist das Werkzeug 12 zwischen den Greifbacken 50.1, 50.2 gehalten. Die verstellbare(n) Greifbacke(n) 50.1 kann/können manuell oder motorisch (z.B. elektrisch oder pneumatisch) verstellt werden. Die hier gezeigte manuelle Verstellung kann bspw. mittels eines Kniehebels 52 realisiert sein, der aufgrund seiner besonderen Kinematik einerseits eine Bewegung der Greifbacke 50.1 zwischen einer geöffneten und einer geschlossenen Position und andererseits ohne zusätzliche Sicherungsmittel eine Sicherung der Greifbacke 50.1 in der geschlossenen Position realisieren kann, sodass das Werkzeug 12 sicher und zuverlässig in der Greifervorrichtung 20 gehalten ist. Alternativ oder zusätzlich kann eine Sicherung des Kniehebels 52 in der geschlossenen Position der Greifbacke 50.1 auch auf andere Weise erfolgen, bspw. mittels eines Rastmechanismus, um ein unbeabsichtigtes Öffnen des Kniehebels 52 sicher zu verhindern. Zur leichteren Betätigung des Kniehebels 52 verfügt dieser über einen Griff 72. Alternativ kann auch eine andere Kinematik für die Betätigung der Greifbacke(n) 50.1, 50.2 eingesetzt werden.

Die vorliegende Erfindung wurde anhand eines bevorzugten Ausführungsbeispiels beschrieben. Im Rahmen der vorliegenden Erfindung sind jedoch eine Vielzahl von Variationen der hier beschriebenen Handhabungsvorrichtung 10 denkbar. Beispielhaft sollen folgende Variationsmöglichkeiten angesprochen werden:
- die Werkzeuggreifervorrichtung 20 kann zum Greifen und Halten von großen Messerköpfen länger ausgestaltet werden,
- die Stabilität der Handhabungsvorrichtung 10 kann an verschiedene Gewichtsanforderungen angepasst werden,
- die Handhabungsvorrichtung 10 kann an verschiedene Maschinenkonfigurationen (z.B. sog. C-Typ) angepasst werden,
- die Werkzeuggreifervorrichtung 20 kann zum Greifen und Halten von verschiedenen Werkzeugen 12 an alle möglichen Werkzeugaufnahmen 14 (z.B. HSK, BT, SK u.a.) angepasst werden.

Bei einer Handhabungsvorrichtung 10 vom sog. C-Typ weist die Trägerstruktur 16 drei Träger auf, die eine C-Form bilden. Die Befestigungsvorrichtung 18 ist an einem oberen Querträger vorgesehen, und die Verstellvorrichtung 22 ist an einem unteren Querträger angeordnet, wobei die Drehachse 30 der Rotationsvorrichtung 28 der Verstellvorrichtung 22 vorzugsweise vertikal ausgerichtet ist. Mit einer Handhabungsvorrichtung 10 vom C-Typ kann mit der Werkzeuggreifervorrichtung 20 besonders gut in ein Fenster einer BNZ-/ CNC-Maschine eingetaucht werden.

Nachfolgend wird ein Beispiel zur Nutzung der erfindungsgemäßen Handhabungsvorrichtung 10 näher erläutert. Dabei soll ein Werkzeug 12 aus einer Werkzeugmaschine entnommen und auf einem Transportwagen abgesetzt werden. Zunächst wird die Linearachse der Translationsvorrichtung 34 auf den Schwerpunkt 36 des zu greifenden Werkzeugs 12 eingestellt. Dazu werden die Mittel 44 betätigt, sodass das Rastelement 46 aus der entsprechenden Öffnung 48 heraustritt und eine Linearverschiebung der Führungsschiene 40 relativ zu dem Führungselement 38 möglich ist. Das Einstellen der Linearachse auf den Schwerpunkt 36 des Werkzeugs 12 kann anhand von Markierungen auf dem Werkzeug 12, anhand einer Tabelle oder anhand von Benutzererfahrung erfolgen. Ziel ist es dabei, dass bei einem von der Werkzeuggreifervorrichtung 20 ergriffenen und gehaltenen Werkzeug 12 der Schwerpunkt 36 des Werkzeugs 12 möglichst dicht an, vorzugsweise auf der Drehachse 30 der Rotationsvorrichtung 28 liegt.

Als nächstes wird der Greifer der Werkzeuggreifervorrichtung 20 geöffnet. Durch Drehen der Greifervorrichtung 20 um die Drehachse 30 wird die Greifvorrichtung 20 in einen gewünschten Aufnahmewinkel gedreht. Anschließend wird die Greifvorrichtung 20 an die Aufnahme 14 des Werkzeugs 12 geführt. Nun kann das Werkzeug 12 durch Schließen des Greifers bzw. der beweglichen Greifbacke(n) 50.1, 50.2 ergriffenen werden. Falls erforderlich, kann auf Seiten der Werkzeugmaschine eine Maschinenspannung (der Greif- oder Spanneinrichtung) für das Werkzeug 12 gelöst werden, so dass das Werkzeug 12 freigegeben ist.

Nun kann die Handhabungsvorrichtung 10 mit dem daran gehaltenen Werkzeug 12 aus der Werkzeugmaschine bewegt werden. In diesem Zusammenhang kann nochmals überprüft werden, ob die Lage des Schwerpunkts 36 des Werkzeugs 12 auf der Drehachse 30 liegt, und ob sich die Handhabungsvorrichtung 10 mit dem Werkzeug 12 in einem Gleichgewichtszustand befinden. Falls dies nicht der Fall ist, wäre ein Drehen des Werkzeugs 12 um die Drehachse 30 kraftaufwändiger. Gegebenenfalls kann die Lage des Werkzeugschwerpunkts 36 bezüglich der Handhabungsvorrichtung 10 bzw. der Drehachse 30 korrigiert werden.

Anschließend kann das Werkzeug 12 durch eine Drehung der Translationsvorrichtung 34 zusammen mit der Werkzeuggreifervorrichtung 20 um die Drehachse 30 in den für die Übergabe an den Transportwagen erforderlichen Winkel gedreht werden. Das Werkzeug 12 wird anschließend mit seiner Werkzeugaufnahme 14 in eine entsprechende Aufnahme am Transportwagen eingeführt. Es ist sicherzustellen, dass das Werkzeug 12 sicher in der Aufnahme sitzt. Wenn dies der Fall ist, kann die Werkzeuggreifervorrichtung 20 geöffnet werden. Damit ist das Werkzeug 12 auf dem Transportwagen abgesetzt und die Handhabungsvorrichtung 20 steht für den Transport oder den Wechsel eines anderen Werkzeugs 12 zur Verfügung.

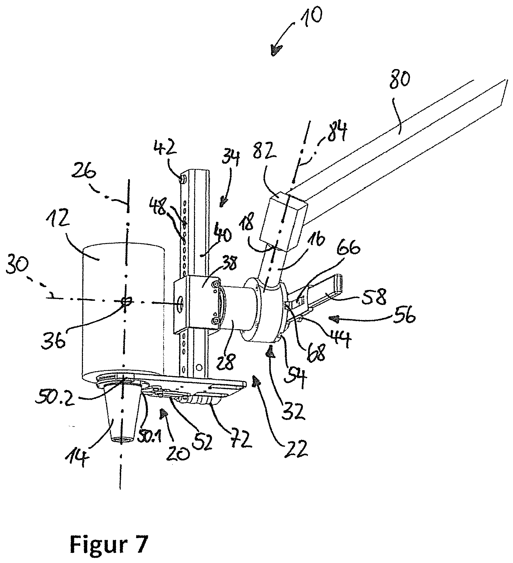

Bei dem weiteren Ausführungsbeispiel der Figur 7 ist die Trägerstruktur 16 als ein Distanzstück ausgebildet. In dem Beispiel hat das Distanzstück 16 die Form eines Hohlzylinders. Selbstverständlich kann die Trägerstruktur 16 auch beliebig anders ausgestaltet sein. Die Trägerstruktur 16 ist über die Befestigungsvorrichtung 18 direkt an einem distalen Ende 82 eines Handhabungsmanipulators 80 befestigt, das heißt nicht über Ketten, Seile und/oder Haken. Dabei kann die Befestigungsvorrichtung 18 bspw. als ein Flansch oder ähnliches zum lösbaren Befestigen der Handhabungsvorrichtung 10 an dem Manipulator 80, bspw. mittels Schrauben, ausgebildet sein. Vorzugsweise ist die Befestigungsvorrichtung 18 ausgebildet, eine drehbare Lagerung der Handhabungsvorrichtung 10 bezüglich des Manipulators 80 zu erlauben. In diesem Zusammenhang kann es vorgesehen sein, dass die Befestigungsvorrichtung 18 ausgebildet ist, eine Drehung der Vorrichtung 10 um die Längsachse 84 der zylinderförmigen Trägerstruktur 16 zu erlauben. Die Längsachse 84 steht vorzugsweise senkrecht auf der Drehachse 30 der Rotationsvorrichtung 28. Die Drehung der Vorrichtung 10 um die Längsachse 84 kann manuell oder motorisch angetrieben erfolgen.

Ferner ist es in beiden beschriebenen Ausführungsbeispielen grundsätzlich möglich, dass die Greifbacken 50.1, 50.2 ausgebildet sind, eine Rotation des Werkzeugs 12 um eine Rotationsachse zu ermöglichen, die der Längsachse 26 des Werkzeugs 12 entspricht. Dazu können die Greifbacken 50.1, 50.2 auf ihrer zur Werkzeugaufnahme 14 gerichteten Innenseite über entsprechende Gleitelement, bspw. in Form von Rollen mit parallel zur Längsachse 26 verlaufenden Drehachsen. Die Drehung des Werkzeugs 12 um die Rotationsachse 26 kann manuell oder motorisch angetrieben erfolgen.

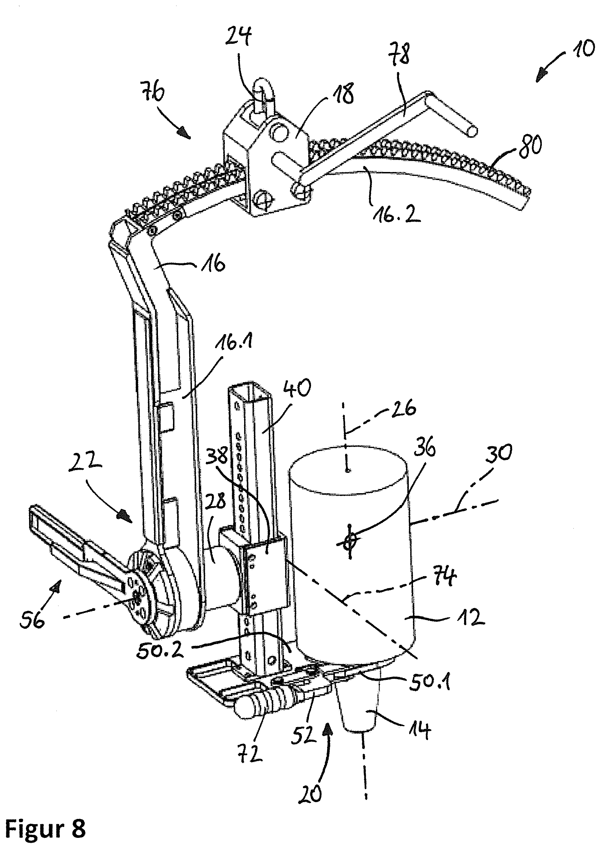

Ein weiteres Ausführungsbeispiel ist in den Figuren 8-10 gezeigt. Im Unterschied zu den bisherigen Beispielen ist in den Figuren 8-10 die Trägerstruktur 16 verstellbar an der Befestigungsvorrichtung 18 befestigt. Zusammen mit der Trägerstruktur 16 können auch die daran befestigten Werkzeuggreifervorrichtung 20 und - sofern vorhanden - die Verstellvorrichtung 22 zum Verstellen der Werkzeuggreifervorrichtung 20 bezüglich der Trägerstruktur 16 relativ zu der Befestigungsvorrichtung 18 verstellt werden. Somit erlaubt dieses Beispiel eine Verstellung, insbesondere eine Neigungsverstellung, der Greifer bzw. der beweglichen Greifbacke(n) 50.1, 50.2 der Werkzeuggreifervorrichtung 20 und eines von den Greifern 50.1, 50.2 eventuell gehaltenen Werkzeugs 12 bzw. der Werkzeugaufnahme 14.

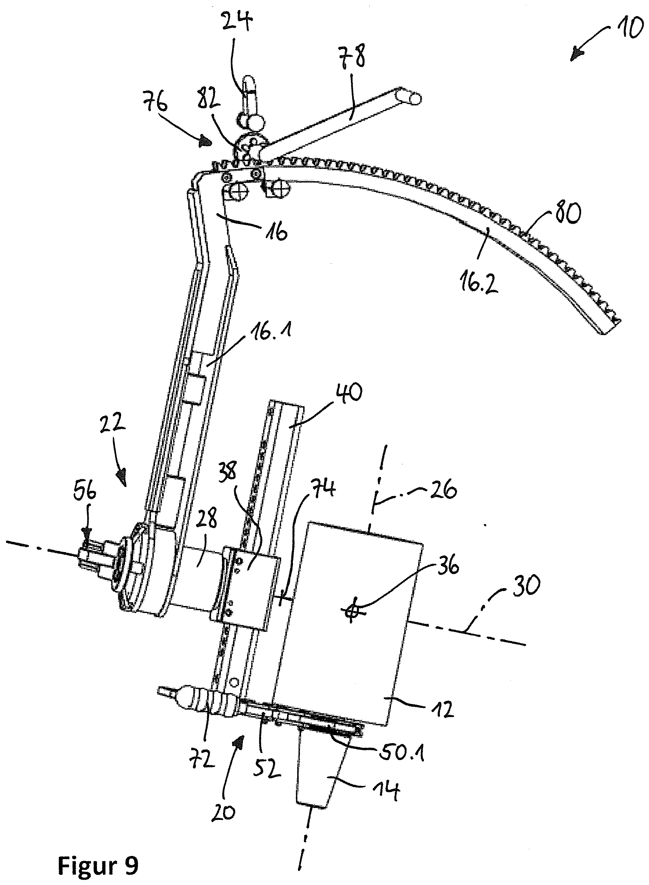

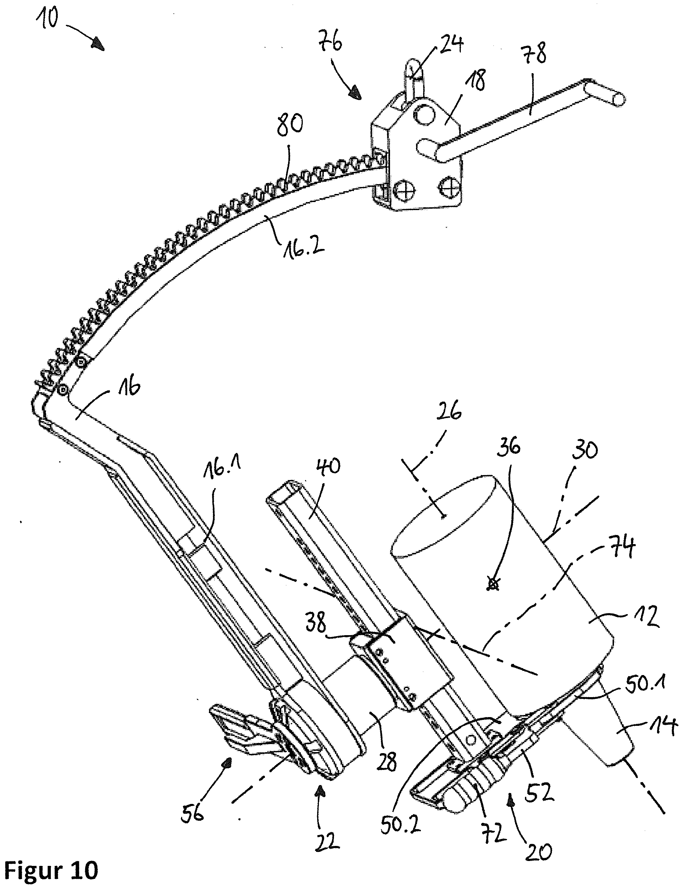

In Abhängigkeit davon, was für eine Art von Werkzeug 12 (Größe, Gewicht, Abmessungen, etc.) die Greifer 50.1, 50.2 ergriffen haben, verändert sich die Schwerpunktlage der Einheit bestehend aus der Handhabungsvorrichtung 10 und dem ergriffenen Werkzeug 12. Durch Verstellen der Trägerstruktur 16 (zusammen mit der Werkzeuggreifervorrichtung 20) relativ zur Befestigungsvorrichtung 18 kann die Schwerpunktlage der Einheit 10, 12 verändert und eingestellt werden. Ferner kann das ergriffene Werkzeug 12 bzw. dessen Greifernut (zwischen Werkzeug 12 und Werkzeugaufnahme 14) durch Verstellen der Trägerstruktur 16 bezüglich der Befestigungsvorrichtung 18 in eine gewünschte Neigung gebracht werden, bspw. ausgehend von einer 0°-Lage (vgl. Figur 8) in beide Richtungen um 35° - 40° relativ zur vertikalen z-Achse geneigt. Beispielhaft ist in Figur 9 eine Neigung um 15° im Uhrzeigersinn und in Figur 10 eine Neigung um 35° im Gegenuhrzeigersinn gezeigt. Derart geneigte Werkzeuge 12 können besonders einfach und schnell mit ihrer Werkzeugaufnahme 14 in schräg stehende Werkzeughalterungen von Werkzeug- oder Transportwagen oder von Werkzeugschränken eingesetzt werden. Dementsprechend können in solchen Werkzeughalterungen schräg gelagerte Werkzeuge 12 durch die Greifer 50.1, 50.2 besonders gut und sicher ergriffen werden, wenn diese zuvor zusammen mit der Trägerstruktur 16 relativ zu der Befestigungsvorrichtung 18 verstellt, insbesondere geneigt worden sind.

In dem gezeigten Beispiel der Figuren 8-10 ist die Trägerstruktur 16 um eine Drehachse 74 neigungsverstellbar an der Befestigungsvorrichtung 18 befestigt. Auf diese Weise ist eine Neigungsverstellung der Trägerstruktur 16 zusammen mit den Greifern 50.1, 50.2 der Werkzeuggreifervorrichtung 20 und eines gegebenenfalls ergriffenen Werkzeugs 12 möglich. Die Drehachse 74 verläuft vorzugweise in einem Abstand zu dem Schwerpunkt 36 des ergriffenen Werkzeugs 12 und/oder zu einem Schwerpunkt der Einheit bestehend aus der Handhabungsvorrichtung 10 und dem ergriffenen Werkzeug 12. Dadurch kann durch Neigungsverstellung der Trägerstruktur 16 um die Drehachse 74 die Schwerpunktlage der Einheit 10, 12 oder des ergriffenen Werkzeugs 12 verstellt werden.

Die Verstellvorrichtung 22 weist eine Rotationsvorrichtung 28 auf, die ausgebildet ist, eine Rotation der Werkzeuggreifervorrichtung 20 bezüglich der Trägerstruktur 16 um die Drehachse 30 zu ermöglichen. Bevorzugt verläuft die Drehachse 74 zur Neigungsverstellung der Trägerstruktur 16 bezüglich der Befestigungsvorrichtung 18 insbesondere senkrecht durch die Drehachse 30 zur Rotation der Werkzeuggreifervorrichtung 20 bezüglich der Trägerstruktur 16 oder oberhalb oder unterhalb der Drehachse 30.

Besonders bevorzugt ist es, wenn die Vorrichtung 10 Mittel 76 zum Verstellen der Trägerstruktur 16 relativ zu der Befestigungsvorrichtung 18 aufweist. Diese Verstellmittel 76 können manuell oder motorisiert angetrieben sein. Ein manueller Antrieb umfasst bspw. einen Hebel oder eine Kurbel 78. Ein motorisierter Antrieb kann bspw. einen Elektromotor umfassen. Die Verstellmittel 76 sollten selbsthemmend sein, so dass die Trägerstruktur 16 nach dem Verstellen in der eingestellten Position bzw. Lage relativ zu der Befestigungsvorrichtung 18 verbleibt. Alternativ können auch zusätzliche Sicherungsmittel vorgesehen sein, um die Trägerstruktur 16 nach dem Verstellen in der eingestellten Position bzw. Lage relativ zu der Befestigungsvorrichtung 18 zu halten.

In dem gezeigten Beispiel weisen die Verstellmittel 76 einerseits eine Zahnstange 80 und anderseits ein mit der Zahnstange 80 in Eingriff stehendes Zahnrad 82 (vgl. Figur 9) auf. In Figur 9 sind zum Sichtbarmachen des Zahnrads 82 die äußeren Wandungen der Befestigungsvorrichtung 18 nicht dargestellt. Das Zahnrad 82 ist drehbar in der Befestigungsvorrichtung 18 gelagert und wird durch die Kurbel 78 in eine Drehbewegung versetzt. Die Zahnstange 80 ist starr an der Trägerstruktur 16 bzw. dem zweiten Träger 16.2 befestigt. Der zweite Träger 16.2 und die Zahnstange 80 sind bevorzugt bogenförmig ausgebildet, wobei der Bogen vorzugsweise auf einer Kreisfläche liegt, deren Mittelpunkt auf der Drehachse 74 zur Neigungsverstellung der Trägerstruktur 16 bezüglich der Befestigungsvorrichtung 18 liegt. Ein Drehen des Zahnrads 82 bewirkt ein Verstellen der Trägerstruktur 16 relativ zu der Befestigungsvorrichtung 18. Statt durch die Kurbel 78 kann das Zahnrad 82 auch auf andere Weise in eine Drehbewegung versetzt werden, bspw. mittels eines Elektromotors, insbesondere eines Schrittmotors. Statt der Verstellmittel 76 mit Zahnstange 80 und Zahnrad 82 kann auch ein Ratschenmechanismus eingesetzt werden. Dieser hätte sogar einen selbsthemmenden Effekt.

## Patentansprüche

1. Vorrichtung (10) zur Handhabung eines Werkzeugs (12) einer Werkzeugmaschine oder eines Roboters, **gekennzeichnet durch**
- eine Trägerstruktur (16),
- eine Befestigungsvorrichtung (18) zur Befestigung der Trägerstruktur (16) an einem Handhabungsmanipulator (80),
- eine an der Trägerstruktur (16) verstellbar befestigte Werkzeuggreifervorrichtung (20) zum Greifen und Halten des Werkzeugs (12), und
- eine zwischen der Trägerstruktur (16) und der Werkzeuggreifervorrichtung (20) wirkende Verstellvorrichtung (22) zum Verstellen der Werkzeuggreifervorrichtung (20) bezüglich der Trägerstruktur (16).

2. Vorrichtung (10) nach Anspruch 1, **dadurch gekennzeichnet, dass** die Befestigungsvorrichtung (18) eine an der Trägerstruktur (16) befestigte oder ausgebildete Öse (24) umfasst, über welche die Vorrichtung (10) an dem Handhabungsmanipulator (80) befestigbar ist.

3. Vorrichtung (10) nach Anspruch 1 oder 2, **dadurch gekennzeichnet, dass** die Befestigungsvorrichtung (18) zur direkten und unmittelbaren Befestigung der Trägerstruktur (16) an dem Handhabungsmanipulator (80) ausgebildet ist.

4. Vorrichtung (10) nach einem der Ansprüche 1 bis 3, **dadurch gekennzeichnet, dass** die Verstellvorrichtung (22) eine Rotationsvorrichtung (28) aufweist, die ausgebildet ist, eine Rotation der Werkzeuggreifervorrichtung (20) bezüglich der Trägerstruktur (16) um eine Drehachse (30) zu ermöglichen.

5. Vorrichtung (10) nach Anspruch 4, **dadurch gekennzeichnet, dass** die Rotationsvorrichtung (28) Mittel (32) zum Festlegen der Werkzeuggreifervorrichtung (20) in einer bestimmten Drehposition um die Drehachse (30) bezüglich der Trägerstruktur (16) aufweist.

6. Vorrichtung (10) nach einem der Ansprüche 1 bis 5, **dadurch gekennzeichnet, dass** die Verstellvorrichtung (22) eine Translationsvorrichtung (34) aufweist, die ausgebildet ist, eine Translation der Werkzeuggreifervorrichtung (20) bezüglich der Trägerstruktur (16) zu ermöglichen.

7. Vorrichtung (10) nach Anspruch 6, **dadurch gekennzeichnet, dass** die Translationsvorrichtung (34) Mittel (44) zum Festlegen der Werkzeuggreifervorrichtung (20) in einer bestimmten Linearposition bezüglich der Trägerstruktur (16) aufweist.

8. Vorrichtung (10) nach einem der Ansprüche 1 bis 7, **dadurch gekennzeichnet, dass** die Werkzeuggreifervorrichtung (20) mindestens einen Greifer jeweils mit mindestens zwei Greifbacken (50.1, 50.2) aufweist, wobei mindestens eine der Greifbacken (50.1) verstellbar ist und wobei bei geschlossenen Greifbacken (50.1, 50.2) das Werkzeug (12) zwischen den Greifbacken (50.1, 50.2) gehalten ist.

9. Vorrichtung (10) nach einem der Ansprüche 1 bis 8, **dadurch gekennzeichnet, dass** die Werkzeuggreifervorrichtung (20) mindestens zwei Greifer aufweist.

10. Vorrichtung (10) nach einem der Ansprüche 1 bis 9, **dadurch gekennzeichnet, dass** die Werkzeuggreifervorrichtung (20) lösbar an der Trägerstruktur (16) befestigt ist, insbesondere mittels Schrauben.

11. Vorrichtung (10) nach einem der Ansprüche 1 bis 10, **dadurch gekennzeichnet, dass** die Trägerstruktur (16) verstellbar an der Befestigungsvorrichtung (18) befestigt ist.

12. Vorrichtung (10) nach Anspruch 11, **dadurch gekennzeichnet, dass** die Trägerstruktur (16) um eine Drehachse (74) neigungsverstellbar an der Befestigungsvorrichtung (18) befestigt ist.

13. Vorrichtung (10) nach Anspruch 12, **dadurch gekennzeichnet, dass** die Verstellvorrichtung (22) eine Rotationsvorrichtung (28) aufweist, die ausgebildet ist, eine Rotation der Werkzeuggreifervorrichtung (20) bezüglich der Trägerstruktur (16) um eine Drehachse (30) zu ermöglichen, und dass die Drehachse (74) zur Neigungsverstellung der Trägerstruktur (16) bezüglich der Befestigungsvorrichtung (18) insbesondere senkrecht durch die Drehachse (30) oder oberhalb oder unterhalb der Drehachse (30) zur Rotation der Werkzeuggreifervorrichtung (20) verläuft.

14. Vorrichtung (10) nach einem der Ansprüche 11 bis 13, **dadurch gekennzeichnet, dass** die Vorrichtung (10) Mittel (76) zum Verstellen der Trägerstruktur (16) relativ zu der Befestigungsvorrichtung (18) aufweist.

15. Vorrichtung (10) nach Anspruch 14, **dadurch gekennzeichnet, dass** die Verstellmittel (76) einen Ratschenmechanismus oder alternativ einerseits eine Zahnstange (80) und anderseits ein mit der Zahnstange (80) in Eingriff stehendes Zahnrad (82) aufweisen, wobei ein Drehen des Zahnrads (82) ein Verstellen der Trägerstruktur (16) relativ zu der Befestigungsvorrichtung (18) bewirkt.
